# EUROPÄISCHE PATENTSCHRIFT

(11) **EP 1 867 020 B1**
(45) Veröffentlichungstag und Bekanntmachung des Hinweises auf die Patenterteilung: **06.09.2017**
(21) Anmeldenummer: 06723743.8
(22) Anmeldetag: 25.03.2006
(51) Int. Cl.: H02B 1/36

(54) **MODULRÜCKWAND FÜR EIN SCHALTANLAGENMODUL, SCHALTANLAGENMODUL UND ELEKTRISCHE SCHALTANLAGE**
MODULAR REAR WALL FOR A SWITCHING SYSTEM MODULE, SWITCHING SYSTEM MODULE AND ELECTRIC SWITCHING SYSTEM
FACE ARRIERE MODULAIRE POUR MODULE D'INSTALLATION DE DISTRIBUTION, MODULE D'INSTALLATION DE DISTRIBUTION ET INSTALLATION DE DISTRIBUTION ELECTRIQUE

(30) Priorität: 08.04.2005 DE 102005016545
(43) Veröffentlichungstag der Anmeldung: 19.12.2007
(73) Patentinhaber: ABB AG, 68309 Mannheim (DE)
(72) Erfinder: MATHES, Werner, 67227 Frankenthal (DE); KRAFT, Klaus, 69123 Heidelberg (DE); MERKEL, Hans-Peter, 69198 Schriesheim (DE); MÜLLER, Klaus-Georg, 69259 Wilhelmsfeld (DE)
(86) Internationale Anmeldenummer: PCT/EP2006/002765
(87) Internationale Veröffentlichungsnummer: WO 2006/105882

(56) Entgegenhaltungen:
- EP-A- 0 109 584
- WO-A-99/46606
- US-A- 4 369 484
- US-A- 5 691 686
- US-A1- 2004 246 661

## Beschreibung

Die Erfindung betrifft eine Modulrückwand mit Messeinrichtung für ein Schaltanlagenmodul einer elektrischen Schaltanlage, insbesondere ein Einschubmodul, mit den Merkmalen des Anspruch 1 sowie ein Schaltanlagenmodul mit einer solchen Modulrückwand und eine elektrische Schaltanlage, insbesondere eine Mittelspannungs- oder Niederspannungsschaltanlage, mit wenigstens einem Schaltanlagenmodul mit erfindungsgemäßer Modulrückwand.

Stetig wachsende, sowie sich häufig ändernde Anforderungen in der Prozessindustrie sowie der Energietechnik bedingen den Einsatz möglichst einfach wandelbarer und wartbarer Mittel- und Niederspannungsschaltanlagen. Zeitgemäße Anlagen weisen dabei in aller Regel mehrere in Einschubtechnik konzipierte Schaltschränke auf, welche vergleichsweise einfach zu bestücken und zu konfigurieren sind. Einschubtechnik bedeutet dabei, dass alle elektrischen Betriebsmittel sowie elektrischen Einrichtungen, wie beispielsweise, als Komponenten verbaute Steuer- und/oder Messeinrichtungen, vorzugsweise auf modularisierten Einschüben angeordnet sind.

Vorteilhaft ist dabei die vereinfachte Zugänglichkeit des jeweiligen Einschubmoduls, indem dieses im Bedarfsfall, beispielsweise bei einer Störung oder einem Ausfall, aber auch bei einer Umgestaltung der jeweiligen Schaltanlage, auf einfache Weise aus dem jeweiligen Schaltschrank entnommen und durch ein geeignetes Modul ersetzt werden kann.

Nachteilig handelt es sich bei den verbauten Steuer- und/oder Messeinrichtungen jedoch in aller Regel um herkömmliche, allgemein verfügbare und nicht auf die Einschubtechnik abgestimmte elektrische bzw. elektronische Komponenten, die oftmals im jeweiligen Schaltanlagenmodul aufgrund ihrer Anordnung und Ausführung vergleichsweise viel Raum beanspruchen und einen erhöhten Konfigurationsaufwand bedingen. Dies führt im Rahmen von Reparatur- und Instandhaltungsmaßnahmen dann meist auch zu längeren Wartungs- und Ausfallzeiten.

Darüber hinaus bedingt der erhöhte Raumbedarf vorgenannter Komponenten oftmals eine räumliche Überdimensionierung des eigentlichen Schaltanlagenmoduls, da durch die spezifische Anordnung und Geometrie der einzelnen Komponenten - ein Modul kann nur so klein sein wie seine größte Komponente - ein Großteil des umbauten Raumes meist nicht nutzbar ist.

Schaltanlagen mit Messeinrichtungen sind beispielsweise aus den Dokumenten US-4369484 A, US-5691686 A bekannt, der Aufbau des Gehäuses eines Schaltanlagenmoduls ist in EP 0109584 A beschrieben.

Aufgabe der Erfindung ist es, bei gegebener Funktonalität, ein Schaltanlagenmodul mit Messeinrichtung mit vereinfachter Handhabung und verbesserter Raumausnutzung anzugeben.

Diese Aufgabe wird durch eine Schaltanlage mit den Merkmalen des Anspruch 10, ein Schaltanlagenmodul mit den Merkmalen des Anspruch 9 sowie eine Modulrückwand mit den Merkmalen des Anspruch 1 gelöst.

Die erfindungsgemäße elektrische Schaltanlage weist dabei wenigstens ein Schaltanlagenmodul, insbesondere ein Einschubmodul, mit einer Modulrückwand mit integrierter Messeinrichtung auf, wobei auch die Modulrückwand integraler Bestandteil des jeweiligen Schaltanlagenmoduls ist.

Mit Hilfe der erfindungsgemäßen, an die jeweiligen Größenerfordernisse der Modultechnik angepassten Modulrückwand mit integrierter Messeinrichtung, ist es nunmehr möglich den in dem betreffenden Schaltanlagenmodul zur Verfügung stehenden Raum bestmöglich zu nutzen. Darüber hinaus ist auch die Handhabung des jeweiligen Schaltanlagenmoduls und damit der elektrischen Schaltanlage verbessert und vereinfacht, indem im Bedarfsfall bei Störung und/oder bei Wartungs- oder

Instandhaltungsarbeiten der Messeinrichtung, lediglich die erfindungsgemäße Modulrückwand ausgewechselt werden muss, ohne dass die übrigen Komponenten und Einbauten des jeweiligen Schaltanlagenmoduls betroffen sind. Somit ist durch lediglich Wechsel der Modulrückwand das Schaltanlagenmodul in der elektrischen Schaltanlage schnellstmöglich wieder bestimmungsgemäß einsetzbar.

Die, in die Modulrückwand integrierte Messeinrichtung umfasst dabei vorteilhaft wenigstens einen Abgangskontakt mit Mitteln zur integrierten Messgrößen-Erfassung und/oder Messgrößen-Vorverarbeitung sowie gegebenenfalls einen oder mehrere Abgangskontakte ohne Messgrößen-Erfassung und/oder ohne Messgrößen-Vorverarbeitung.

Des Weiteren weist die Messeinrichtung der Modulrückwand vorzugsweise wenigstens einen Zugangskontakt auf.

In einer weiteren Ausführungsform umfasst die Messeinrichtung wenigstens eine Übertragungseinheit zur Messdatenübertragung, wobei vorsehbar ist, dass wenigstens eine Schnittstelle vorhanden ist, mittels der die erfassten und/oder vorverarbeiteten Messdaten abrufbar bereitgestellt sind.

Bei der wenigstens einen Schnittstelle kann es sich dabei insbesondere um eine, mit einer entsprechend eingerichteten Datenverarbeitungseinrichtung auslesbaren Schnittstelle, beispielsweise eine RS-232, RS485/RS422 und/oder eine USB-Schnittstelle handeln. Auch übliche Netz- oder Busanbindungen zum Auslesen oder Abrufen der erfassten und/oder vorverarbeiteten Messdaten über ein entsprechendes Bus- oder Leitsystem und/oder über ein lokales oder globales Netzwerk, insbesondere das Internet, beispielsweise zum Zwecke einer Ferndiagnose, sind vorteilhaft vorsehbar. Alternativ dazu sind auch Schnittstellen zur drahtlosen Informationsübertragung an ein entsprechendes Leit- oder Bussystem und/oder eine dafür eingerichtete Datenverarbeitungseinrichtung, beispielsweise mittels Wireless LAN (WLAN) oder Bluetooth, vorsehbar.

Eine Schnittstelle zur Spannungsversorgung, beispielsweise der Mittel zur integrierten Messgrößen-Erfassung und/oder Messgrößen-Vorverarbeitung, ist ebenfalls vorsehbar, wobei in einer alternativen Ausgestaltung auch eine gemeinsame Schnittstelle zur Datenübertragung und Spannungsversorgung vorgesehen sein kann.

Die weitere Darlegung der Erfindung erfolgt anhand einiger Figuren und Ausführungsbeispiele.

Anhand der in den beigefügten Zeichnungen dargestellten Ausführungsbeispiele der Erfindung sollen die Erfindung, vorteilhafte Ausgestaltungen und Verbesserungen der Erfindung sowie besondere Vorteile der Erfindung näher erläutert und beschrieben werden.

Es zeigen:
Fig. 1 Explosionsdarstellung einer beispielhaft ausgestalteten Modulrückwand für ein Schaltanlagenmodul
Fig. 2 Perspektivische Darstellung der Rückansicht der gemäß Fig. 1 beispielhaft ausgestalteten Modulrückwand
Fig. 3 Perspektivische Darstellung der Frontansicht der gemäß Fig. 1 beispielhaft ausgestalteten Modulrückwand
Fig. 4 Frontdarstellung der gemäß Fig. 1 beispielhaft ausgestalteten Modulrückwand
Fig. 5 Rückwärtige Darstellung der gemäß Fig. 1 beispielhaft ausgestalteten Modulrückwand
Fig. 6 Perspektivische Darstellung der gemäß Fig. 1 beispielhaft ausgestalteten Modulrückwand mit Messeinrichtung mit Rückwandelement und Eingangskontakten
Fig. 7 Perspektivische Darstellung der gemäß Fig. 1 beispielhaft ausgestalteten Modulrückwand mit Messeinrichtung mit Rückwandelement, Eingangskontakten und Abschottung
Fig. 8 Perspektivische Darstellung der gemäß Fig. 1 beispielhaft ausgestalteten Modulrückwand mit Messeinrichtung mit Rückwandelement, Eingangskontakten, Abschottung und Abgangskontakten
Fig. 9 Perspektivische Darstellung der gemäß Fig. 1 beispielhaft ausgestalteten Modulrückwand mit Messeinrichtung mit Rückwandelement, Eingangskontakten, Abschottung, Abgangskontakten und Übertragungseinheit

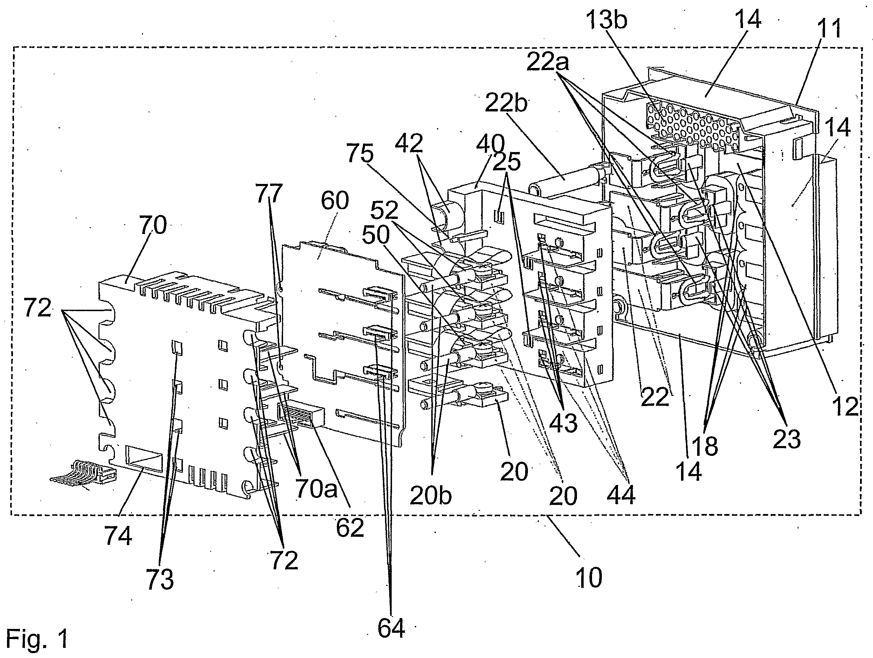

In Fig. 1 ist eine beispielhaft ausgestaltete Modulrückwand 10 mit intergraler Messeinrichtung 24 für ein Einschubmodul für eine elektrische Schaltanlage in Explosionsdarstellung gezeigt.

Die gezeigte Modulrückwand 10 ist dabei integraler Bestandteil des jeweiligen Schaltanlagenmoduls und bildet anteilig das Modulgehäuse aus.

Die Modulrückwand 10 umfasst ein wannenartig ausgestaltetes Rückwandelement 11 mit einem Wannenboden 12 und vier Seitenwänden 14. Der Wannenboden 12, dessen Außenseite die Rückseite 16 der Modulrückwand 10 bildet, weist dabei eine nahezu rechteckige bis quadratische Querschnittsfläche auf. Der Wannenboden 12des Rückwandelementes 11 weist mehrere Sockel mit Ausnehmungen 18 zur Aufnahme und zum Durchgriff von Abgangs- 20 und/oder Eingangskontakten 22 der Messeinrichtung auf. Im hier gezeigten Beispiel sind insgesamt acht Sockel mit Ausnehmungen 18 für je vier Eingangskontakte 22 und vier Ausgangskontakte 20 vorgesehen.

Die Modulrückwand 10, sowie das wannenartige Rückwandelement 11, weisen an ihren Seitenwänden 14 Mittel auf, die eine Verbindung der Modulrückwand 10 mit dem übrigen Modulgehäuse erlauben. Beispielsweise in Form von Haken und/oder Schnappern 30, um ein Verrasten in Ösen oder Ausnehmungen des übrigen Modulgehäuses zu ermöglichen oder umgekehrt. Modulgehäuse und Modulrückwand 10 weisen dabei jeweils komplementäre, das heißt, sich ergänzende Verbindungsmittel auf.

Darüber hinaus ist das Rückwandelement 11 zur mittels eines entsprechenden Anschlusselementes 13b zur Aufnahme eines Mehrpolanschlusses bzw. -steckers vorbereitet.

Die Modulrückwand 10 umfasst eine integrierte Messeinrichtung, die hier beispielhaft mehrere Komponenten umfasst, die maßgeblich im Wanneninnern des Rückwandelementes 11 angeordnet sind. Das Rückwandelement 11 sowie die Komponenten der Messeinrichtung besitzen Verbindungselemente 23, 25, beispielsweise Schnapper oder Haken 23 und komplementär entsprechende Ausnehmungen 25 und Ösen um im eingebauten Zustand eine gegen unbeabsichtigtes Lösen gesicherte Verbindungen miteinander einzugehen und als integrale Bestandteile eine Einheit, die Modulrückwand 10, zu bilden.

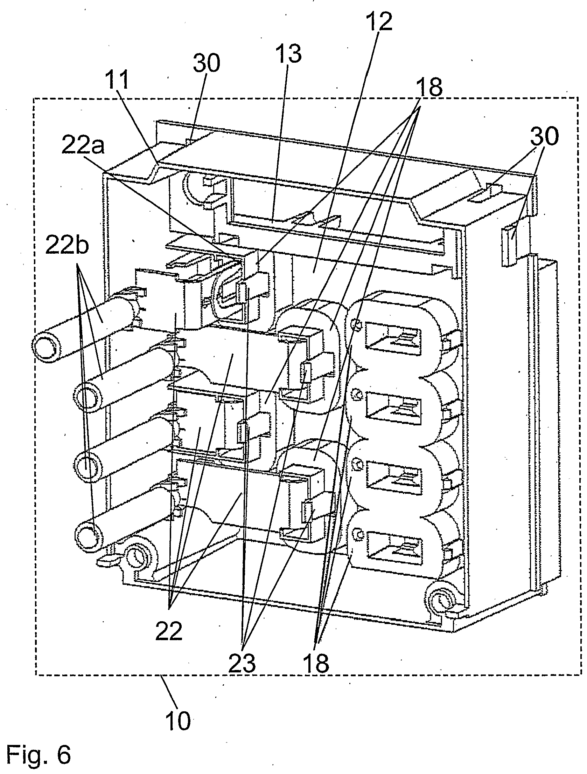

Ausgehend von der Wannenbodeninnenseite des Rückwandelementes 11 weist die Messeinrichtung mehrere Eingangskontakte 22 auf. Jeder der hier gezeigten vier Eingangskontakte 22 weist ein, durch die dafür vorgesehenen Sockel 18 des Wannenbodens 12 des Rückwandelementes 11 durchgreifendes klemmenartiges Kontaktende 22a auf, sowie ein sich in das Wanneninnere des Rückwandelementes 10 erstreckendes fingerartiges Kontaktende 22b auf. Entsprechendes ist in Fig. 6 in perspektivischer Draufsicht auf das Rückwandelement 11 in Blickrichtung von Rechts angegeben.

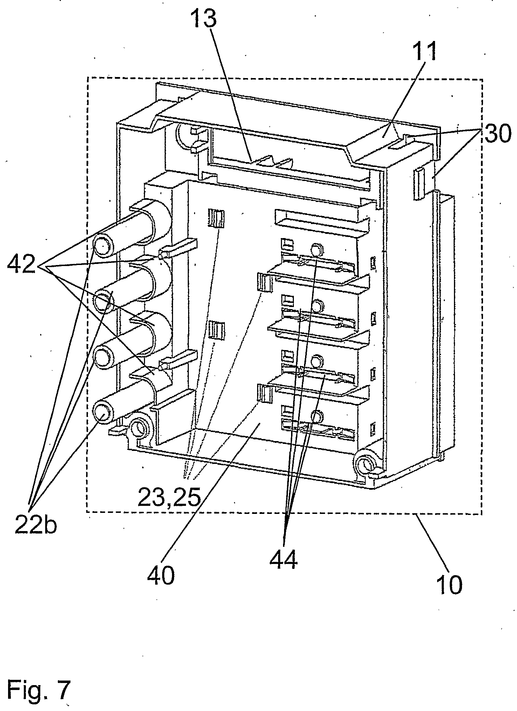

Als weitere Komponente umfasst die Messeinrichtung eine Kunststoffschottung 40 zwischen Eingangs- 22 und Abgangskontakten 20, um diese elektrisch gegeneinander abzuschirmen bzw. voneinander zu isolieren und so die Gefahr von Kurzschlüssen zu vermeiden. Die Kunststoffschottung 40 ist haubenartig ausgebildet und deckt zumindest die Sockel 18 zur Aufnahme der Eingangskontakte 22 nahezu vollständig ab. In der Kunststoffschottung 40 sind Ausnehmungen mit Anformungen 42 zum Durchgriff und zur Führung der fingerartigen Kontaktenden 22b der Eingangskontakte 22 vorgesehen. Des Weiteren weist die Kunststoffschottung 40 Ausnehmungen mit Anformungen 44 zur Anordnung und Führung sowie den Durchgriff der Abgangskontakte 20 durch die dafür vorgesehenen Sockel 18 des Wannenbodens 12 des Rückwandelementes 11 auf. Entsprechendes ist in Fig. 7 in perspektivischer Draufsicht auf das Rückwandelement 11 in Blickrichtung von Rechts angegeben.

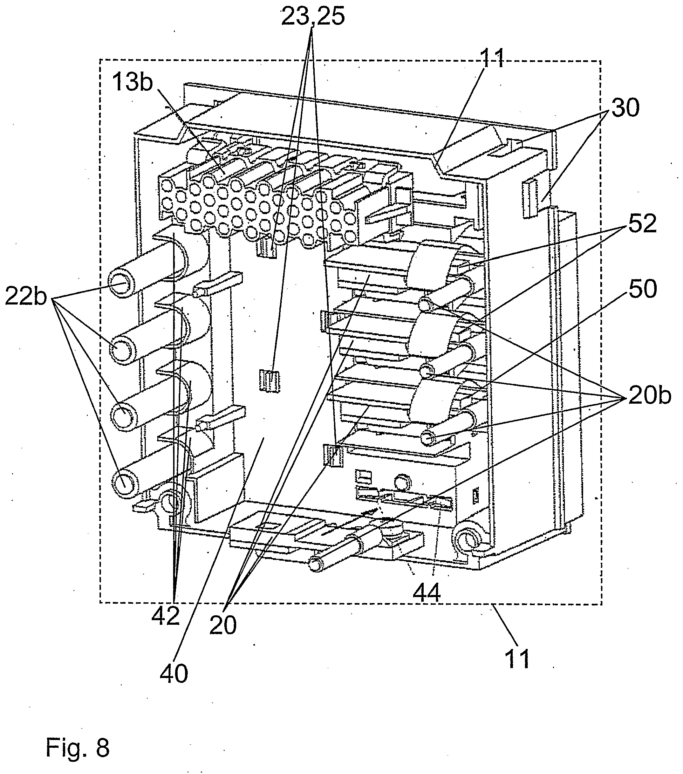

Auch jeder, der hier gezeigten vier Abgangskontakte 20 besitzt dabei ein, durch die dafür vorgesehenen Sockel 18 des Wannenbodens 12 des Rückwandelementes 11 und bis auf dessen Rückseite 16 durchgreifendes, klemmenartiges Kontaktende 20a, sowie ein, sich in das Wanneninnere des Rückwandelementes 11 erstreckendes, fingerartiges Kontaktende 20b. Wie auch anhand von Fig. 8, in perspektivischer Draufsicht auf das Rückwandelement 11 mit Eingangskontakten 22, Abschottung 40 und Abgangskontakten 20 in Blickrichtung von Rechts ersichtlich.

Drei der gezeigten vier Abgangskontakte 20 weisen darüber hinaus Mittel zur Messgrößen-Erfassung 50 und/oder Messgrößen-Vorverarbeitung 52 auf, beispielsweise zur Filterung und/oder Verstärkung gegebenenfalls aber auch zur Mittelwertbildung der erfassten Messdaten.

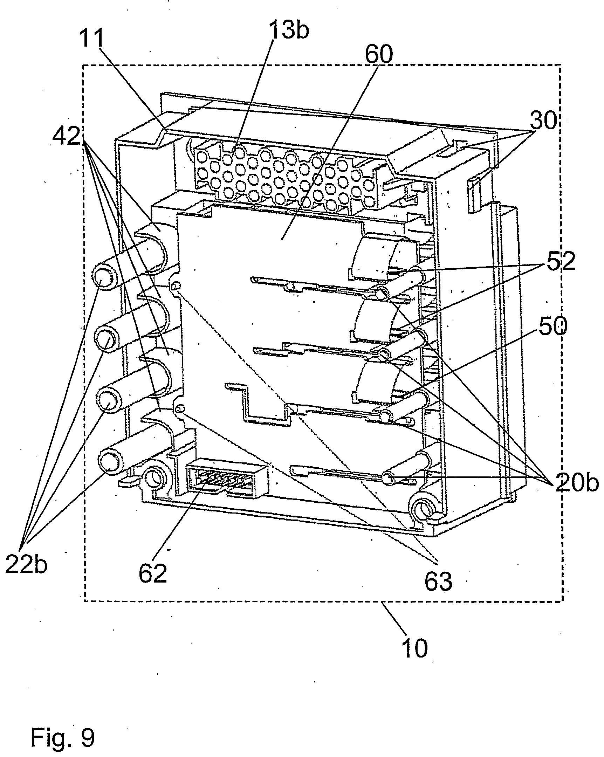

Als weitere Komponente der Messeinrichtung ist eine Übertragungseinheit 60 zur Messdaten- und/oder Informationsübertragung vorgesehen, diese ist hier beispielhaft als Übertagungsplatine mit geeigneter Bestückung und entsprechenden Bauelementen ausgeführt. Die Übertragungseinheit 60 umfasst vorteilhaft wenigstens eine vorkonfigurierbare Schnittstelle 62, durch welche die erfassten und/oder vorverarbeiteten Messdaten abrufbar bereitgestellt sind. Die Bereitstellung der Messdaten erfolgt dabei im Zugriff auf die entsprechenden Abgangskontakte 20 und/oder deren Mittel zur Messgrößen-Erfassung 50 und/oder Messgrößen-Vorverarbeitung 52. Wie auch in Fig. 9 in perspektivischer Draufsicht auf das Rückwandelement 11 in Blickrichtung von Rechts angegeben.

Bei der wenigstens einen vorkonfigurierbaren Schnittstelle 62 kann es sich dabei insbesondere um eine, mit geeigneten Datenverarbeitungseinrichtungen auslesbare Schnittstelle, beispielsweise eine RS-232, RS485/RS422 und/oder eine USB-Schnittstelle handeln, aber auch übliche Netz- oder Busanbindungen, wie beispielsweise eine Ethernet-Schnittstelle, zum Auslesen der relevanten Statusinformationen über ein entsprechendes Bus- oder Leitsystem und/oder über ein lokales oder globales Netzwerk sind vorteilhaft vorsehbar. Alternativ oder ergänzend dazu ist auch wenigstens eine Schnittstelle zur drahtlosen Informationsübertragung an ein entsprechendes Leitsystem und/oder eine dafür eingerichtete Datenverarbeitungseinrichtung, beispielsweise mittels Wireless LAN (WLAN) oder Bluetooth, vorsehbar.

Ergänzend weist die Übertragungseinheit 60 eine Schnittstelle zur Spannungsversorgung, beispielsweise der Übertragungsplatine sowie ihrer Bauelemente und/oder der Mittel zur Messgrößen-Erfassung 50 und/oder Messgrößen-Vorverarbeitung 52 selbst auf, welche mit der Schnittstelle zur Datenübertragung koppel- bzw. kombinierbar ist.

Darüber hinaus weist die in Fig. 1 gezeigte Übertragungseinheit 60 Anformungen mit Ausnehmungen 64 zum Durchgriff auf die Abgangskontakte 20 und/ode ihrer Mittel zur Messgrößen-Erfassung 50 und/oder Messgrößen-Vorverarbeitung 52 auf.

Abschließend ist noch eine Abdeckung 70 mit Anformungen 70a zum Durchgriff durch die Ausnehmungen 64 der Übertragungseinheit 60 zur Trennung der Phasen, sowie Aussparungen 72 zum Durchgriff der Eingangs- 22 und Abgangskontakte 20 sowie einer Ausnehmung 74 zum Zugriff auf die Schnittstelle 62 der Messeinrichtung 24 vorgesehen, welche die Messeinrichtung gegen das Innere des jeweiligen Schaltanlagenmoduls abschottet und vor Verunreinigungen und Beschädigungen, insbesondere bei der Montage, schützt.

Auch weist das wannenartige Rückwandelement 11, im Bereich des Wannenbodens 12 im Wanneninnern weitere Verbindungsmittel 23 auf, die eine Verbindung des Rückwandelementes 11 mit der Messeinrichtung 24 und/oder einzelner Komponenten 40 der Messeinrichtung 24 erlauben. Beispielsweise in Form von Haken und/oder Schnappern 23, um ein Verrasten in Ösen oder Ausnehmungen zu ermöglichen. Auch eine Verschraubung von Messeinrichtung 24 und Rückwandelement 11 und/oder einzelner Komponenten der Messeinrichtung 24 untereinander ist grundsätzlich vorsehbar. So verrasten Rückwandelement 11 und Abschottung 40 über die komplementären Verbindungsmittel Schnapper 23 und Ausnehmungen 25 , wodurch die Eingangskontakte in ihrer Einbauposition fixiert sind. Des Weiteren verrasten Abschottung 40 und Kunststoffabdeckung 70 über die komplementären Verbindungsmittel Schnapper 73 und Ausnehmungen bzw. Fenster 43, wodurch sowohl Übertragungseinheit 60 als auch Abgangskontakte 20 in ihrer Einbaulage fixiert sind. Zusätzlich sind noch Einbauhilfen 75,77 zum Einbau und der Fixierung der Übertragungseinheit 60 vorgesehen.

Vorteilhaft sind das Rückwandelement 11, die Abschottung 40 sowie die Abdeckung 70 aus Kunststoff, insbesondere aus elektrisch nicht leitendem Kunststoff, ausgebildet.

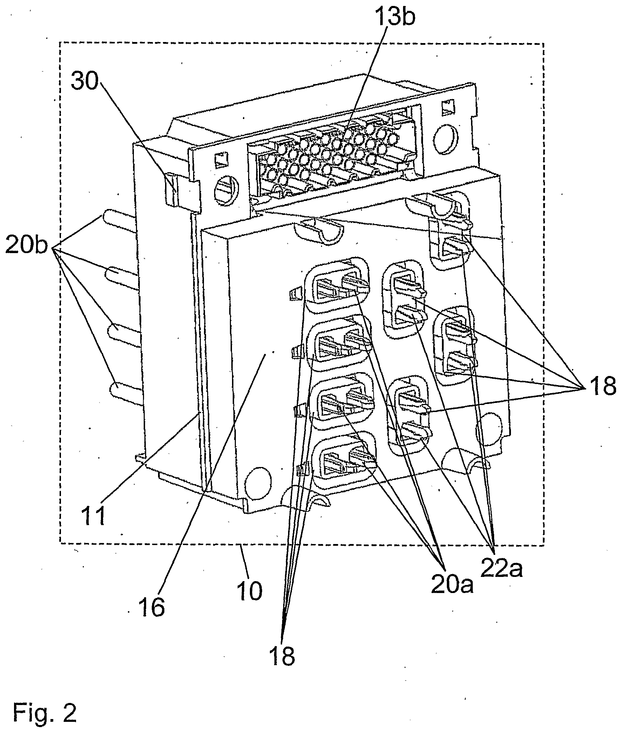

In Fig. 2 ist die gemäß Fig.1 beispielhaft ausgestaltete Modulrückwand 10 in rückwärtiger, perspektivischer Darstellung in Blickrichtung von Links gezeigt. Angegeben sind dabei die klemmenartigen Kontaktenden 20a,22a der Eingangs- 22 und Abgangskontakte 20 sowie die zugehörigen Sockel mit Ausnehmungen 18 in der Außenseite bzw. Rückseite 16 des Wannenbodens 12 des Rückwandelementes 11. Ebenfalls angegeben sind die fingerartigen Kontaktenden 20b der Abgangskontakte 20. Des weiteren befinden sich auf der Rückseite des Rückwandelementes 11 Zentriereinrichtungen 11a und 11b zur Führung der Modulrückwand in eine entsprechende nicht dargestellte Aufnahmevorrichtung und/oder Adaptereinheit.

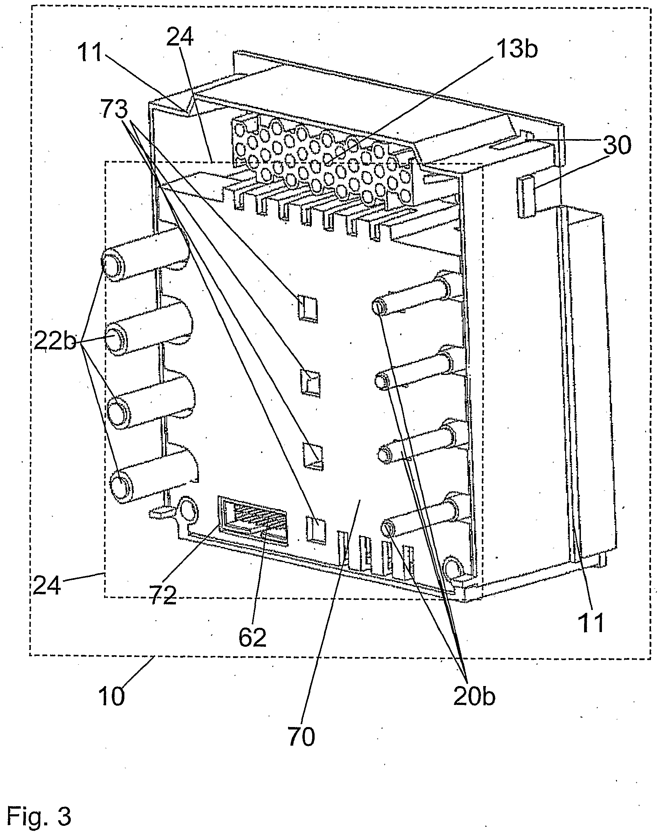

In Fig. 3 die gemäß Fig.1 beispielhaft ausgestaltete Modulrückwand 10 in perspektivischer Darstellung in Blickrichtung von Rechts ins Wanneninnere gezeigt. Angegeben sind dabei das wannenartig ausgebildete Rückwandelement 11, die vorkonfigurierbare Schnittstelle 62 der Messeinrichtung 24, die fingerartigen Kontaktenden 20b,22b der Eingangs- 22 und Abgangskontakte 20 sowie die Kunststoffabdeckung 70.

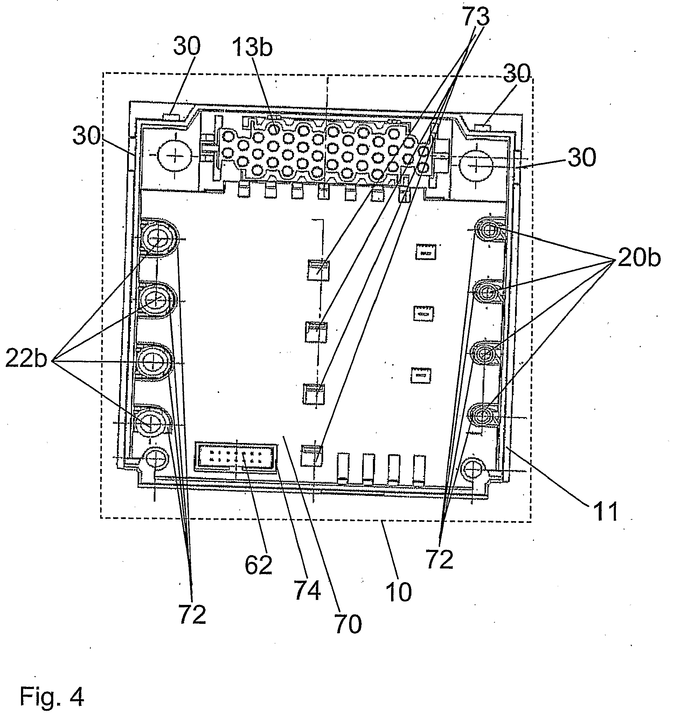

In Fig. 4 ist die gemäß Fig. 1 beispielhaft ausgestaltete Modulrückwand 10 in Blickrichtung ins Wanneninnere auf die Messeinrichtung 24 gezeigt, wobei die vorkonfigurierbare Schnittstelle 62 der Messeinrichtung 24, die fingerartigen Kontaktenden 20b,22b der Eingangs- 22 und Abgangskontakte 20 sowie die Kunststoffabdeckung 70 mit Aussparungen 72 zum Durchgriff der Eingangs- 22 und Abgangskontakte 20 sowie einer Ausnehmung 74 als Anschlussmöglichkeit und zum Zugriff auf die Schnittstelle 62.

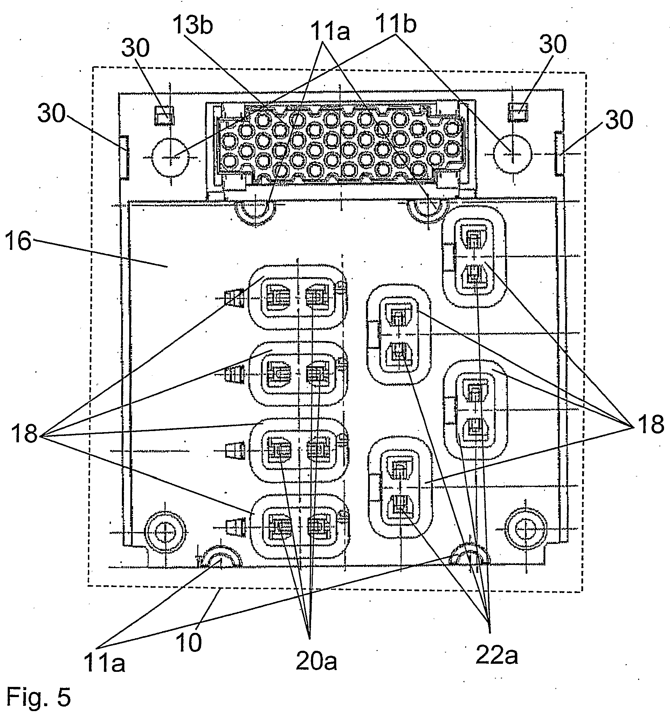

In Fig. 5 ist die gemäß Fig. 1 beispielhaft ausgestaltete Modulrückwand 10 in rückwärtiger Ansicht gezeigt, die Rückseite 16 des Rückwandelementes 11 weist dabei Sockel und Ausnehmungen 18 zur Aufnahme und zum Durchgriff der klemmenartigen Kontaktenden 20b,22b der Eingangs- 22 und Abgangskontakte 20 auf.

In Fig. 6 ist die gemäß Fig. 1 beispielhaft ausgestaltete Modulrückwand 10 mit eingebauten Eingangskontakten 22 mit Sockel mit Ausnehmungen 18 zum Durchgriff und zur Führung der fingerartigen Kontaktenden 22b der Eingangskontakte 22 in perspektivischer Darstellung in Blickrichtung von Rechts auf die Wanneninnenseite gezeigt. Darüber hinaus ist das Rückwandelement 11 mittels einer Ausnehmung 13 zur Aufnahme eines Anschlußelementes 13b für einen Mehrpolstecker vorbereitet.

In Fig. 7 ist die gemäß Fig. 1 beispielhaft ausgestaltete Modulrückwand 11 mit eingebauter Kunststoffschottung 40 zwischen Eingangs- 22 und Abgangskontakten 20 mit Ausnehmungen mit Anformungen 42 zum Durchgriff und zur Führung der fingerartigen Kontaktenden 22b der Eingangskontakte 22 in perspektivischer Darstellung in Blickrichtung von Rechts auf die Wanneninnenseite gezeigt.

In Fig. 8 ist die gemäß Fig. 1 beispielhaft ausgestaltete Modulrückwand 11 mit eingebauter Kunststoffschottung 40 zwischen Eingangs- 22 und Abgangskontakten 20 mit Ausnehmungen mit Anformungen 42 zum Durchgriff und zur Führung der fingerartigen Kontaktenden 22b der Eingangskontakte 22, sowie drei eingebauten und einem zum Einbau vorgesehenen Abgangskontakt in perspektivischer Darstellung in Blickrichtung von Rechts auf die Wanneninnenseite gezeigt.

In Fig. 9 ist die gemäß Fig. 1 beispielhaft ausgestaltete Modulrückwand 11 mit eingebauter Kunststoffschottung 40 zwischen Eingangs- 22 und Abgangskontakten 20 mit Ausnehmungen mit Anformungen 42 zum Durchgriff und zur Führung der fingerartigen Kontaktenden 22b der Eingangskontakte 22, sowie vier eingebauten Abgangskontakten und der Übertragungseinheit 60 mit vorkonfigurierbarer Schnittstelle 62 in perspektivischer Darstellung in Blickrichtung von Rechts auf die Wanneninnenseite gezeigt.

## Patentansprüche

1. Modulrückwand (10) für ein Schaltanlagenmodul, insbesondere ein Einschubmodul, mit einer Messeinrichtung (24), worin die Messeinrichtung (24) in der Modulrückwand (10) integriert angeordnet ist und die Modulrückwand (10) einen integralen Bestandteil des Schaltanlagenmoduls bildet und ein wannenartig ausgestaltetes Rückwandelement (11) mit einem Wannenboden (12) und vier Seitenwänden (14) vorgesehen ist, wobei die Außenseite des Wannenbodens (12) die Rückseite (16) der Modulrückwand (10) bildet, und der Wannenboden (12) dabei eine nahezu rechteckige bis quadratische Querschnittsfläche sowie mehrere Sockel mit Ausnehmungen (18) zur Aufnahme und zum Durchgriff von Abgangs- (20) und/oder Eingangskontakten (22) der Messeinrichtung (24) aufweist und an den Seitenwänden (14) Mittel vorgesehen sind, die eine Verbindung der Modulrückwand (10) mit einem übrigen Modulgehäuse erlauben.

2. Modulrückwand (10) nach Anspruch 1, **dadurch gekennzeichnet, dass** die Messeinrichtung (24) wenigstens einen Abgangskontakt (20) mit Mitteln zur integrierten Messgrößen-Erfassung (50) und/oder Messgrößen-Vorverarbeitung (52) aufweist.

3. Modulrückwand (10) nach einem der vorherigen Ansprüche, **dadurch gekennzeichnet, dass** die Messeinrichtung (24) wenigstens einen Abgangskontakt (20) ohne Messgrößen-Erfassung und/oder ohne Messgrößen-Vorverarbeitung aufweist.

4. Modulrückwand (10) nach einem der vorherigen Ansprüche, **dadurch gekennzeichnet, dass** die Messeinrichtung (24) wenigstens einen Eingangskontakt (22) aufweist.

5. Modulrückwand (10) nach einem der vorherigen Ansprüche, **dadurch gekennzeichnet, dass** die Messenrichtung (24) wenigstens eine Übertragungseinheit (60) zur Messdatenübertragung aufweist.

6. Modulrückwand (10) nach Anspruch 5, **dadurch gekennzeichnet, dass** die Übertragungseinheit (60) wenigstens eine Schnittstelle (62) aufweist, mittels der die erfassten und/oder vorverarbeiteten Messdaten abrufbar bereitgestellt sind.

7. Modulrückwand (10) nach einem der Ansprüche 5 oder 6, **dadurch gekennzeichnet, dass** die Übertragungseinheit (60) wenigstens eine Schnittstelle zur Spannungsversorgung aufweist.

8. Modulrückwand (10) nach einem der Ansprüche 5 bis 7, **dadurch gekennzeichnet, dass** die Übertragungseinheit (60) wenigstens eine gemeinsame Schnittstelle zur Datenübertragung und Spannungsversorgung aufweist.

9. Schaltanlagenmodul, insbesondere ein Einschubmodul, mit einer Modulrückwand (10) gemäß einem der Ansprüche 1 bis 8.

10. Elektrische Schaltanlage, insbesondere eine Niederspannungs- oder Mittelspannungsschaltanlage, mit wenigstens einem Schaltanlagenmodul gemäß Anspruch 9.

## Claims

1. Module rear wall (10) for a switchgear assembly module, in particular a withdrawable module, having a measuring device (24), wherein the measuring device (24) is arranged such that it is integrated in the module rear wall (10), and the module rear wall (10) forms an integral part of the switchgear assembly module and a rear wall element (11) in the form of a trough and having a trough base (12) and four side walls (14) is provided, wherein the outer side of the trough base (12) forms the rear side (16) of the module rear wall (10), and in this case the through base (12) has a virtually rectangular to square cross-sectional area and a plurality of sockets with cutouts (18) for accommodating and passing through outgoing contacts (20) and/or input contacts (22) of the measuring device (24) and means are provided on the side walls (14) which allow for the module rear wall (10) to be connected to a remainder of the module housing.

2. Module rear wall (10) according to Claim 1, **characterized in that** the measuring device (24) has at least one outgoing contact (20) having means for integrated measured-variable detection (50) and/or measured-variable preprocessing (52).

3. Module rear wall (10) according to one of the preceding claims, **characterized in that** the measuring device (24) has at least one outgoing contact (20) without measured-variable detection and/or measured-variable preprocessing.

4. Module rear wall (10) according to one of the preceding claims, **characterized in that** the measuring device (24) has at least one input contact (22).

5. Module rear wall (10) according to one of the preceding claims, **characterized in that** the measuring device (24) has at least one transmission unit (60) for measured data transmission.

6. Module rear wall (10) according to Claim 5, **characterized in that** the transmission unit (60) has at least one interface (62), by means of which the detected and/or preprocessed measured data are made available for callup.

7. Module rear wall (10) according to either of Claims 5 and 6, **characterized in that** the transmission unit (60) has at least one interface for voltage supply.

8. Module rear wall (10) according to one of Claims 5 to 7, **characterized in that** the transmission unit (60) has at least one common interface for data transmission and voltage supply.

9. Switchgear assembly module, in particular a withdrawable module, having a module rear wall (10) according to one of Claims 1 to 8.

10. Electrical switchgear assembly, in particular a low-voltage or medium-voltage switchgear assembly, having at least one switchgear assembly module according to Claim 9.

## Revendications

1. Paroi arrière de module (10) pour un module de système de commutation, notamment un module enfichable, comprenant un dispositif de mesure (24), le dispositif de mesure (24) étant disposé intégré dans la paroi arrière de module (10) et la paroi arrière de module (10) formant une partie intégrante du module de système de commutation, et un élément de paroi arrière (11) aménagé en forme de cuvette pourvu d'un fond en cuvette (12) et de quatre parois latérales (14) étant présent, le côté extérieur du fond en cuvette (12) formant le côté arrière (16) de la paroi arrière de module (10), et le fond en cuvette (12) possédant ici une surface de section transversale quasiment rectangulaire à carrée ainsi que plusieurs socles munis de cavités (18) destinées à l'accueil et à l'accès traversant de contacts de départ (20) et/ou d'arrivée (22) du dispositif de mesure (24) et des moyens étant présents sur les parois latérales (14), lesquels permettent une liaison de la paroi arrière de module (10) avec un boîtier de module restant.

2. Paroi arrière de module (10) selon la revendication 1, **caractérisée en ce que** le dispositif de mesure (24) possède au moins un contact de départ (20) doté de moyens servant à l'acquisition de grandeurs mesurées (50) et/ou au prétraitement de grandeurs mesurées (52) intégrées.

3. Paroi arrière de module (10) selon l'une des revendications précédentes, **caractérisée en ce que** le dispositif de mesure (24) possède au moins un contact de départ (20) sans acquisition de grandeurs mesurées et/ou prétraitement de grandeurs mesurées.

4. Paroi arrière de module (10) selon l'une des revendications précédentes, **caractérisée en ce que** le dispositif de mesure (24) possède au moins un contact d'arrivée (22).

5. Paroi arrière de module (10) selon l'une des revendications précédentes, **caractérisée en ce que** le dispositif de mesure (24) possède au moins une unité de transmission (60) destinée à la transmission de valeurs mesurées.

6. Paroi arrière de module (10) selon la revendication 5, **caractérisée en ce que** l'unité de transmission (60) possède au moins une interface (62) au moyen de laquelle les données mesurées acquises et/ou prétraitées sont mises à disposition de manière à pouvoir être invoquées.

7. Paroi arrière de module (10) selon l'une des revendications 5 ou 6, **caractérisée en ce que** l'unité de transmission (60) possède au moins une interface destinée à l'alimentation électrique.

8. Paroi arrière de module (10) selon l'une des revendications 5 à 7, **caractérisée en ce que** l'unité de transmission (60) possède au moins une interface commune destinée à la transmission de données et à l'alimentation électrique.

9. Module de système de commutation, notamment module enfichable, comprenant une paroi arrière de module (10) selon l'une des revendications 1 à 8.

10. Système de commutation électrique, notamment système de commutation à basse tension ou à moyenne tension, comprenant au moins un module de système de commutation selon la revendication 9.
